Europäisches Patentamt

European Patent Office

Office européen des brevets

(11) Publication number: **0 256 500**
**A2**

## EUROPEAN PATENT APPLICATION

(21) Application number: 87111633.1

(22) Date of filing: 11.08.87

(51) Int. Cl.⁴: **C08F 265/08** , C08F 259/06 ,
C09D 3/00

(30) Priority: 20.08.86 US 898358

(43) Date of publication of application:
24.02.88 Bulletin 88/08

(84) Designated Contracting States:
DE FR GB IT

(71) Applicant: THE GLIDDEN COMPANY
900 Huntington Building 925 Euclid Avenue
Cleveland Ohio 44115(US)

(72) Inventor: Martino, Phillips C.
4646 Boxwood Drive
Brunswick Ohio(US)
Inventor: Maw, Tai-shih
4 Allegra Drive
Valley Cottage New York(US)

(74) Representative: Baillie, Iain Cameron et al
c/o Ladas & Parry Isartorplatz 5
D-8000 München 2(DE)

(54) Emulsion polymers containing acrylonitrile or vinylidene chloride.

(57) A two-stage emulsion process to produce a core/shell emulsion polymer comprising copolymerizing first stage monomers including acrylonitrile and/or vinylidene chloride to form a core and copolymerizing second stage monomers substantially free of acrylonitrile and/or vinylidene chloride to form a shell and a resulting core/shell polymer.

EP 0 256 500 A2

## EMULSION POLYMERS CONTAINING ACRYLONITRILE OR VINYLIDENE CHLORIDE

This invention pertains to water reducible can coatings and particularly to multi-stage emulsion polymerized polymers containing acrylonitrile and vinylidene chloride.

The prior art has disclosed various emulsion polymers useful for interior coatings for beverage cans. For instance, U.S. Patent 4,499,212 discloses a two-stage thermosetting latex copolymer useful as interior can coatings which contain self-curing functionality on or near the surface of the emulsion polymer particle formed to provide viscosity stability and improved spray performance.

Various patents such as U.S. Patent 4,195,005 and U.S. Patent 4,195,006 suggest that permeability of can coatings can be improved by the inclusion of 25% to 40% acrylonitrile into the polymer. Similarly, U.S. Patent 3,922,451 suggests that polymers containing major amounts of copolymerized vinylidene chloride above 85% can produce useful can coatings.

It now has been found in accordance with this invention that core/shell latex polymers produced by multi-stage emulsion polymerization of ethylenic monomers, including minor amounts of acrylonitrile and/or vinylidene chloride monomers copolymerized in the early stages, substantially improve flavor resistance properties which are susceptible to deterioration upon contacting certain beverages. Flavor problems associated with food or beverage can coatings may be caused by certain low molecular weight polymer fragments, initiator by products, chain transfer agents or other extractable low molecular weight components which can diffuse from the coating into the beverage. Flavor problems can also result from the applied cured coatings absorbing contaminants from the air prior to filling the can by the brewer or bottler, which later diffuse from the coating to the beverage. Other possible sources of contaminants include pre-treatment chemicals, lubricants and the like used in forming the metal can itself which subsequently migrate into the applied coating. Certain flavor components in the food or beverage, particularly terpenes in soft drinks, may also be selectively absorbed by the coating to impart flavor characteristic to the beverage. The two-stage process of this invention produces a highly desireable flavor resistant core/shell emulsion · polymer where the emulsion is stable, maintains viscosity stability and can be easily spray applied to interior can surfaces. A major advantage of the multi-stage emulsion polymers containing minor amounts (10% to 40%) by weight copolymerized acrylonitrile and/or vinylidene chloride include beverage can coatings exhibiting outstanding flavor resistance properties. These and other advantages will become more apparent from the detailed description and the illustrative examples.

### SUMMARY OF THE INVENTION

Briefly, the process of this invention comprises copolymerizing ethylenically unsaturated monomers, including minor amounts of acrylonitrile and/or vinylidene chloride, in a multi-stage emulsion polymerization process to produce core/shell polymer particles stably dispersed in water where the acrylonitrile or vinylidene monomer comprises between 10% to 40% by weight of the total monomers. The monomers preferably comprise one or more vinyl aromatic hydrocarbon such as styrene, one or more alkyl acrylates or methacrylates, at least one carboxylic acid monomer, and one or more functional monomers adapted to self-crosslinking. In accordance with this invention, the acrylonitrile and/or vinylidene chloride are preferably copolymerized with vinyl aromatic, acrylate or methacrylate, and carboxylic acid monomers in the first stage to produce a core polymer particle. In polymerization processes based on m ore that two stages, any of the first stages prior to the last stage polymer shell formation can contain the copolymerized acrylonitrile and/or vinylidene chloride in combination with the vinyl aromatic acrylate or methacrylate and carboxylic acid monomers.

### DETAILED DESCRIPTION OF THE INVENTION

In accordance with this invention, the process pertains to multi-stage emulsion polymerization of ethylenically unsaturated monomers, including the copolymerization of minor amounts of acrylonitrile monomers and/or vinylidene chloride monomers in the first stages of the process, to produce a highly desirable can coating. The resulting emulsion polymer comprises copolymerized monomers on a weight basis of (i) between 10% and 75% aromatic hydrocarbon monomer (ii) between 10% and 75% acrylate (methacrylate) monomer, (iii) between 1% and 20% carboxylic acid monomer, (iv) between 1% and 25% functional monomer, and (v) other ethylenic monomers along with 10% to 40% copolymerized acrylonitrile and/or vinylidene chloride monomers.

Vinyl aromatic monomers include for instance styrene, o-, m-, p-alkyl styrenes such as the o-, m-, or p-methyl, ethyl, propyl and butyl styrenes, 2,4-dimethylstyrene, 2,3-dimethyl styrene, 2,5-dimethyl styrene, and similar alkyl styrene or substituted alkyl styrenes, vinyl naphthalene methyl vinyl ether, n-butyl vinyl ether, phenyl vinyl ether, and halogenated styrenes such as alpha-chloro styrene, o-, m-, or p-chloro styrene, 2,4-dichloro styrene, 2,3-dichlorostyrene, and 2,5-dichloro styrene.

Acrylate monomers include lower alkyl esters of acrylic or methacrylic acid having an alkyl ester portion containing between 1 to 12 carbon atoms as well as aromatic derivatives of acrylic or methacrylic acid. Useful acrylic monomers include, for example, methyl acrylate and methacrylate, ethyl acrylate and methacrylate, butyl acrylate and methacrylate, propyl acrylate and methacrylate, 2-ethyl hexyl acrylate and methacrylate, cyclohexyl acrylate and methacrylate, decyl acrylate and methacrylate, isodecylacrylate and methacrylate, benzyl acrylate and methacrylate, and various products from the reaction of butyl, phenyl, and cresyl glycidyl ethers with acrylic and methacrylic acids.

Carboxylic acid monomers may include for instance acrylic or methacrylic acid, ethacrylic acid, alpha-chloroacrylic acid, alpha-cyanoacrylic acid, crotonic acid, beta-acryloxy propionic acid and beta-styryl acrylic acid as well as olefinic unsaturated acids such as fumaric acid, maleic acid or anhydride, itaconic acid, citraconic acid, mesaconic acid, muconic acid, glutaconic acid, aconitic acid, hydrosorbic acid, sorbic acid, alpha-chlorosorbic acid, cinnamic acid, and hydromuconic acid as well as esters of such acids. Preferred carboxylic acid monomers are methacrylic acid and acrylic acid.

Functional monomers include for instance, hydroxyl, amine, and amide functional group containing monomers. Hydroxyl containing monomers are hydroxy containing ethylenically unsaturated monomers including hydroxy alkyl acrylates such as 2-hydroxy ethyl acrylate and methacrylate, 2-hydroxypropyl acrylate and methacrylate, and similar hydroxy alkyl acrylates. Amide containing monomers include for example, acrylamide and methacrylamide, similar alkyl acrylamide monomers such as methylol acrylamide and methylolmethacryl amid and etherified acrylamide monomers such as (butoxymethyl) acrylamide and (butoxymethyl) methacrylamide.

The remaining other ethylenic monomers include polymerizable ethylenically unsaturated monomers containing carbon-carbon unsaturation and include vinyl esters such as vinyl acetate, vinyl propionate, vinyl butyrates, vinyl benzoates, vinyl isopropyl acetates and similar vinyl esters; or vinyl aliphatic hydrocarbon monomers which include alpha olefins such as ethylene, propylene, isobutylene and cyclohexe as well as conjugated dienes such as 1,3 butadiene, methyl-2-butadiene, 1,3-piperylene, 2,3 dimethyl butadiene, isoprene, cyclopentadiene, and dicyclopentadiene; or vinyl alkyl ethers monomers such as methyl vinyl ether, isopropyl vinyl ether, n-butyl vinyl ether, and isobutyl vinyl ether.

The resulting thermosetting self-curing emulsion polymer containing copolymerized hydrocarbon monomer, acrylate monomer, carboxylic monomer, functional monomer, and other ethylenic monomers, along with 10% to 40% by weight acrylonitrile and/or vinylidene chloride monomer can be produced by multi-stage emulsion polymerization through free radical induced polymerization using peroxy or azo catalyst, common redox catalyst, ultraviolet radiation, or the like. Free radical initiators for example include various peroxygen compounds such as persulfates, benzoyl peroxide, t-butyl hydroperoxide, cumene hydroperoxide, and similar peroxide catalysts. Azo compounds include for example azo bisisobutyronitrile and dimethylazobisisobutyrate. Initiating systems further include alkali metal persulfate or ammonium persulfate with or without a reducing substances adapted to activate the persulfate. The initiators or catalysts ordinarily are used at a level of about 0.1% to 1% by weight of monomers.

Water dispersed copolymers preferably are emulsion polymers produced by emulsion polymerization in the presence of an emulsifier although similar aqueous polymerization processes can be used. The most preferred polymers are latex polymers. Monomer stages are sequentially emulsion copolymerized during 6-8 hours at temperatures of between 25-90°C. Preferred temperature is 40-75°C. utilizing standard semi-continuous methodology. Monomer conversion is routinely 99.8% and the final non-volatile content is usually 45-55%. Latex particle size is determined by the level of primary surfactant in the initial reactor charge. The preferred particle size is 2000-4000 A for optimum spray performance, although this range can be expanded for other application purposes since particle size has been found to have little effect upon coatings performance. Polymer Tg is also important for spray application characteristics, and the Tg should be between about 0°C. and 70°C.

In preparing the reactive self-curing latex copolymer, the ethylenically unsaturated monomers are copolymerized in water by the multi-step polymerization described above through free radical induced polymerization. The first stage monomer polymerization step includes the acrylonitrile and/or vinylidene chloride monomer along with vinyl aromatic, acrylate or methacrylate, and carboxylic acid monomers. Although acrylonitrile and vinylidene chloride generally copolymerize poorly with vinyl aromatic monomers both have fair to excellent reactivity with acrylate and methacrylates. Therefore, including sufficient quantities of acrylate or methacrylate monomer exhibiting good reactivity with acrylonitrile and/or vinylidene chloride is essential to efficient con version. In the case of acrylonitrile, complete conversion to copolymer is important due to toxicity of the monomer. However, conventional techniques used to reduce free acrylonitrile monomer relay on additives which may inhibit cure (e.g., amines, U.S. Patents 4,396,740; 4,287,308; 4,251,412) reduce water resistence (e.g., sulfites or bisulfites U.S. Patent 4,255,307) or even contribute objectionable flavor properties to the coating (e.g., sulfides, U.S. Patents 4,278,582, 3,998,797). All of these methods to reduce acrylonitrile can be detrimental to latex performance in a can coating. In accordance with this invention, an especially useful method for incorporation of acrylonitrile into the latex copolymers without the use of additives is achieved by a sequential two-step copolymerization of the monomers. Acrylonitrile is first copolymerized with suitable acrylate or methacrylate monomers to form the latex particle core, which comprises 10-90% of the total monomers. The shell monomers, which do not contain acrylonitrile, are then copolymerized over the latex particle core. Free acrylonitrile monomer in the finished latex can be routinely reduced to safe levels (1-10 ppm) using variations of this technique. This technique is a preferred method to eliminate free acrylonitrile from these latices.

Adoptation of this core/shell polymerization technique to latices containing vinylidene chloride also resulted in coatings with significantly improved flavor properties when used in can coating formulations. In addition, latices incorporating vinylidene chloride by this technique do not display the sensitivity to high pH or solvents (no discoloration nor agglomeration) as do most commercial vinylidene chloride based latices. Although not intending to be bound by theory, this probably results from shielding of the vinylidene chloride containing core copolymer from base and solvents by the crosslinked shell copolymer.

A highly desirable sprayable coating composition can be produced when based on the reactive self-curing latex copolymer as the binder system in the coating. Coating compositions can be based on the latex polymer above or contain a polymer blend as in U.S. Patent 4,522,961. The foregoing matrix polymer compositions can be mixed with water-dispersable crosslinking component generally referred to as aminoplast resins adapted to heat cure and crosslink with the carboxyl functionality of the matrix copolymer. On a polymer weight basis, the coating composition contains between 0% and 15% aminoplast crosslinking resin mixed with between 85% and 100% of the above indicated matrix polymer mixtures.

For spraying, the coating composition preferably contains between about 10% and 30% by weight polymeric solids relative to 70% to 90% water, including other volatiles such as minor amounts of solvent. For application methods other than spraying, the aqueous polymeric dispersions can contain between about 10% and 50% by weight water. Organic solvents can be utilized to facilitate spray or other application methods and such solvents include n-butanol, 2-butoxy-ethanol-1, xylene, toluene, and preferably n-butanol is used in combination with 2-butoxy-ethanol-1. The coating composition of the present invention can be pigmented and/or opacified with known pigments and opacifiers. For many uses, including food uses, the preferred pigment is titanium dioxide. The resulting aqueous coating composition can be applied satisfactorily by conventional methods known in the coating industry. Thus, spraying, rolling, dipping, and flow coating application methods can be used for both clear and pigmented films, although spraying is preferred. After application onto the metal substrate, the coating is cured thermally at temperatures between about 95°C. and 235°C.

## EXAMPLE I

This example demonstrates the preparation of an emulsion copolymer containing acrylonitrile by the method disclosed in this invention.

Loaded 120 parts deionized water and 0.50 parts sodium dihexyl sulfosuccinate into the reactor and heated under nitrogen sparge with agitation to 77°C. At reaction temperature, sparge was turned off and 0.10 parts ammonium bicarbonate, 1.2 parts styrene, 0.80 parts ethyl acrylate and 0.30 parts ammonium persulfate added at 10 minute intervals. After the ammonium persulfate was added the monomers were allowed to react 30 minutes before beginning monomer stage number one.

Monomer stage number one contained 24.0 parts acrylonitrile 20.0 parts ethyl acrylate, 2.5 parts methacrylic acid and 0.10 parts sodium bis-(tridecyl)sulfosuccinate. The monomer mix was added to the reactor at a continuous rate over 2-1/2 hours with agitation at 77°C.

Monomer feed number two consisted of 24.0 parts styrene, 20.0 parts ethyl acrylate, 2.5 parts methacrylic acid, 5.0 parts N-isobutoxy methyl acrylamide and 0.10 parts sodium bis(tridecyl)-sulfosuccinate. This monomer mix was added to the reactor over 2-1/2 - 3 hours, also maintaining temperature at 77-78°C. After completion of the monomer mix addition, the batch was held an additional 5 hours 77° to reduce free monomer levels to acceptable levels.

GC analysis of the latex produced using this process indicates free acrylonitrile levels are in the range 0-15 ppm.

EXAMPLE 2

This example demonstrates the preparation of an emulsion copolymer containing vinylidene chloride by the method disclosed in this invention.

Loaded 90 parts deionized water and 0.10 parts sodium dihexyl sulfosuccinate into the reactor and heated under nitrogen sparge to 45°C. At reaction temperature the sparge was replaced with a nitrogen blanket, and a mixture of 1.0 parts vinylidene chloride, 1.0 parts methyl acrylate and 0.14 parts of 70% aqueous t-butyl hydroperoxide were added and allowed to emulsify 10 minutes. The polymerization was initiated by adding 3 parts of a solution containing 0.8 parts sodium formaldehyde sulfoxylate dissolved into 30 parts deionized water. The polymerization was allowed to proceed one hour before beginning monomer stage number one.

Monomer stage one contained 15.0 parts styrene, 20.0 parts vinylidene chloride, 10.0 parts methyl acrylate, 1.5 parts methacrylic acid, 0.58 parts 70% aqueous t-butyl hydroperoxide and 0.10 parts sodium bis(tridecyl) sulfosuccinate. This monomer mix was added to the reactor at a continuous rate over 6 hours while maintaining temperature at 45°. During addition of monomer stage one, 8.0 parts of the aqueous sodium formaldehyde sulfoxylate solution was added at a uniform rate to the reactor to maintain polymerization.

Monomer feed number two contained 25.0 parts styrene, 20.0 parts methyl acrylate, 5.0 parts N-isobutoxy methylacrylamide, 1.5 parts methacrylic acid, 0.58 parts of 70% aqueous t-butyl hydroperoxide and 0.10 parts sodium bis-(tridecyl) sulfosuccinate. The second stage monomers were added to the reactor at a continuous rate over six hours. During the addition of monomer stage two, 8.0 parts of the aqueous sodium formaldehyde sulfoxylate solution was also added to the reactor at a uniform rate.

After completion of the monomer additions, the batch was held one hour at 45°, followed by one hour at 65°. This procedure insured essentially complete conversion of monomers to polymer.

The foregoing description and illustrative examples disclose and describe a core/shell emulsion polymer having acrylonitrile and/or vinylidene chloride copolymerized in the core only to produce an excellent polymer useful as a binder in interior can coatings; however, the claims are not intended to be limiting except by the appended claims.

Claims

1. An emulsion process for copolymerizing ethylenically unsaturated monomers, including acrylonitrile monomer or vinylidene monomer, comprising:

copolymerizing said ethylenically unsaturated monomers in a two-stage process to produce a core/shell emulsion polymer, wherein first stage monomer includes acrylonitrile and/or vinylidene chloride and the last stage monomers are substantially free of acrylonitrile and/or vinylidene chloride, said core/shell emulsion polymer comprising on a weight basis between (i) 10% and 75% aromatic hydrocarbon monomer, (ii) 10% and 75% alkyl acrylate or methacrylate monomer, (iii) 1% and 20% carboxylic acid monomer, (iv) 1% and 25% functional monomer having hydroxyl amine, or amide functionality, and (v) the remaining being other ethylenic monomer.

2. A process according to claim 1, wherein the first stage monomers include acrylonitrile.

3. A process according to claim 1, wherein the first stage monomers include vinylidene chloride monomer.

4. A process according to claim 1, wherein the first stage monomers include a mixture of acrylonitrile and vinylidene chloride monomer.

5. A process according to claim 1, wherein the first stage monomers include alkyl acrylate monomer or alkyl methacrylate monomer.

6. A process according to claim 5, wherein the first stage monomers include vinyl aromatic monomer.

7. A process according to any one of the preceding claims, wherein the core of the core/shell emulsion polymer comprises between 10% and 90% by weight of the copolymerized monomers forming the core/shell emulsion polymer.

8. A process according to any one of the preceding claims, wherein the first stage monomer comprises from 10 to 40% acrylonitrile and/or vinylidene chloride.

9. A substrate coated with an emulsion polymer obtained by the process of any one of the preceding claims.

10. A can coated with an emulsion polymer obtained by the process of any one of the preceding claims.